# EUROPEAN PATENT SPECIFICATION

(11) **EP 0 820 004 B1**
(45) Date of publication and mention of the grant of the patent: **10.04.2002**
(21) Application number: 97305382.0
(22) Date of filing: 18.07.1997
(51) Int. Cl.: G06F 3/12, G06K 15/00

(54) **Print system, print method, printer driver and printer**
Druckersystem, Druckverfahren, Druckertreiber und Drucker
Système d'impression, méthode d'impression, programme pilote d'imprimante et imprimante

(30) Priority: 19.07.1996 JP 19084996
(43) Date of publication of application: 21.01.1998
(73) Proprietor: SEIKO EPSON CORPORATION, Shinjuku-ku, Tokyo (JP)
(72) Inventor: Suzuki, Tetsuya, Suwa-shi, Nagano-ken (JP); Murata, Sunao, Suwa-shi, Nagano-ken (JP); Miyashita, Takeshi, Suwa-shi, Nagano-ken (JP); Nozawa, Shinji, Suwa-shi, Nagano-ken (JP); Tanaka, Koji, Suwa-shi, Nagano-ken (JP); Sumi, Shinji, Suwa-shi, Nagano-ken (JP)
(74) Representative: Sturt, Clifford Mark

(56) References cited:
- EP-A- 0 659 570
- WO-A-90/12372

## Description

### BACKGROUND OF THE INVENTION

### Field of Invention

The present invention relates to a print system including a host computer and a printer connected with the host computer and, in particular, to an improvement in a print speedup technology suitable for a print system using a page printer.

### Description of Related Art

EP 0659570 describes a printer including a non-volatile memory and a converter to convert data representing a form template from a high level language into an intermediate level language format. The form data in intermediate format is stored in the non-volatile memory. Input data received by the printer in a high level language, for example in page description language (PDL) format, is also converted into the intermediate format. The input data and form data, both in the intermediate level format may then be easily overlaid and printed. Because the form has been pre-processed into the intermediate language level format, the form including the data can be printed in a shorter period of time.

WO 90/12372 describes a printer having an interface for interpreting a variety of plotting commands which may be output from a variety of computers.

In a page printer, due to the structure of a print engine thereof, after printing has started, it is impossible to stop the feeding of print sheets or to return the print sheets in the reverse direction in the middle of the printing. Also, even when the page printer is not capable of having a bit map memory corresponding to one page, printing must be executed at a speed near the maximum performance of the print engine..

In order to realise the above-mentioned functions, in the prior art, a controller employed in the page printer includes a high-power CPU and a mass storage memory and, in this respect, the controller is more powerful that the host computer.

Also, the controller of the page printer does not translate one or more plotting commands from a host computer directly into one or more bit map images but allows an intermediate code to intervene in the middle of translation from the plotting commands to the bit map images, thereby being able not. only to simplify the next and following operations of translation into the bit map images but also to facilitate the conversion of the plotting commands free from the detailed characteristics of the print engine, so that the efficiency of the whole print processing can be improved. Therefore, in the controller of the page printer, a module which interprets a plotting command and creates an intermediate code corresponding to the plotting command is clearly separate from a module which interprets the thus created intermediate code and creates a page of bit map images.

In recent years, the CPU power and memory capacity of a host computer have improved greatly and, as an inevitable consequence of this, the quantity of plotting commands to be supplied to a printer has also increased greatly. As a result, the CPU power and memory capacity of the printer have become insufficient to realise a desired print throughout. Also, there arises a problem that, because the printer is short of memory capacity, there occurs over-memory or irreversible compression so that perfect printing cannot be realised. One solution to alleviate memory capacity is a printer having a non-volatile memory such as a hard disc, as is referred to in EP 0659570A. However, the demands of the printer controller are not reduced because the printer translates the plotting commands from the host computer into the intermediate code. Whilst a printer driver is included in the host computer, the printer driver does not provide the print job data in an intermediate level code so that the data processing for conversion of the plotting commands to bit map data in the printer can be alleviated.

However, from the viewpoint of cost reduction, it is difficult to increase the power of the controller and hardware of the printer or to increase the number of memories thereof.

Similar problems are found not only in the page printer but also in a system which uses a printer of another type such as a serial printer or the like.

In view of the above, it is an object of the invention to provide an improved print system which can improve the throughput of the whole system even without enhancing the throughput of a printer itself.

### SUMMARY OF INVENTION

In attaining the above object, according to a first aspect of the invention, there is provided a print system comprising a host computer and a printer connected to the host computer , wherein said host computer includes a printer driver used to generate print job data including plotting commands to be given to said printer characterised in that the printer driver includes intermediate level print job data generation means used to generate intermediate level print job data including plotting commands at least part of which is expressed in a first intermediate code format , and said printer includes intermediate code convert means used to receive said intermediate level print job data and convert said plotting commands to a second intermediate code format and further convert means used to convert the plotting commands expressed in said second intermediate code format to bit map image data for printing.

According to the present print system, in the host computer, part or all of the plotting commands are converted to the intermediate code format before being transmitted to the printer. Therefore, in the printer, there can be omitted a processing which converts the plotting commands written in a high-level language to the intermediate code. In this manner, according to the invention, since the intermediate code generation processing, which has been conventionally performed only in the printer, can be shared by the host computer, especially when the memory or CPU of the host computer has capabilities to spare, and the printing speed of the printer can be enhanced.

The printer driver further may include high-level job data generation means used to generate high-level print job data in which the plotting commands thereof are all expressed in a high-level printer control language, and mode select means used to select one of the intermediate level job data generation means and the high-level job data generation means. In this case, the printer further may include graphics means which is used to convert the plotting commands expressed in the high-level printer control language to the second intermediate code.

In this structure, two operation modes can be used selectively on a case-by-case basis: that is, an operation mode in which all the plotting commands with respect to the printer are expressed in the high-level printer control language as in the prior art; and, an operation mode in which the plotting commands are in part or wholly converted to the intermediate code. In this case, it is preferable that selection of one of the two operation modes can be decided automatically. In a preferred embodiment of the invention, the operation mode can be selected automatically by synthetically considering the kinds of application programs, the capabilities of the printer, and the capabilities of the host computer.

Also, when selecting the operation mode automatically, the operation mode may be decided according to a print job unit; or, a page unit, a band unit, or a plotting command unit; or, an application program unit.

The print job data can also be formed such that it includes specification information for specifying which plotting commands are converted to the intermediate code. For example, when all the plotting commands are converted to the intermediate codes, the print job data can declare in the head portion thereof to the effect that all the plotting commands are converted to the intermediate codes. Also, when only the specific pages, specific bands, or specific commands are converted to the intermediate codes, the declaration to this effect can be set in the head of the specific pages, bands or commands. Such declaration, that is, such specification information, can be described in the printer control language.

From the viewpoint of relieving the processing burden of the printer, it is preferred that the first intermediate code to be generated by the printer driver and the second intermediate code to be generated by the printer be in the same format. However, there is a possibility that, since the roles of the two intermediate codes are different from each other, they can be different in the details thereof. For example, the first intermediate code must include bit image data on the individual characters to be plotted and on the individual images to be plotted. On the other hand, in an ordinary printer, such bit image data is managed at a different storage location from the intermediate code and, therefore, the second intermediate code does not include such bit image data.

According to a second aspect of the present invention there is provided a printing method using a host computer and a printer connected to the host computer, said method characterised by the following steps:
generating, in said host computer intermediate level print job data including plotting commands which are to be given to said printer and at least part of which is expressed in a first intermediate code format and then transmitting said generated print job data to said printer;
receiving, in said printer, said intermediate level print job data and converting said plotting commands to a second intermediate code format ; and
converting, in said printer, the plotting commands expressed in said second intermediate code format to bit map image data for printing.

According to a third aspect of the present invention there is provided a printer driver for generating print job data including plotting commands to be given to a printer characterised in that the printer driver includes intermediate level print job data generation means used to generate intermediate level job data including plotting commands at least part of which is expressed in a first intermediate code format.

According to a fourth aspect of the present invention there is provided a program medium carrying a printer driver computer program for generating print job data including plotting commands to be given to a printer, characterised in that said program medium carries a group of instructions for generating intermediate level print job data including plotting commands, at least part of which is expressed in a first intermediate code format, in such a manner that said group of instructions can be read and understood by a computer.

According to a fifth aspect of the present invention there is provided a printer, characterised by:
means for receiving intermediate level print job data including plotting commands at least part of which is expressed in a first intermediate code format;
intermediate code convert means for converting said plotting commands expressed in said first intermediate code format to a second intermediate code format; and
further convert means for converting the plotting commands expressed in said second intermediate code format to bit map image data for printing.

### BRIEF DESCRIPTION OF THE DRAWINGS

Fig. 1 is a block diagram of the overall structure of an embodiment of a print system according to'the invention;
Fig. 2 is a block diagram of the functional structure of a printer driver 9 provided within a host computer 1;
Fig. 3 is an explanatory view of an example of job data;
Fig. 4 is a block diagram of the functional structure of a controller 11 provided in a printer 3;
Fig. 5 is a flow chart of the overall flow of a processing to be performed by the printer driver 9;
Fig. 6 is a flow chart of a page mode decision processing and a banding decision processing;
Fig. 7 is a table of evaluation points which are used to decide a page mode;
Fig. 8 is a flow chart of the details of a processing to be performed in Step S7 shown in Fig. 5;
Fig. 9 is a flow chart of the details of a processing to be performed in Step S8 shown in Fig. 5; and,
Fig. 10 is a flow chart of a processing to be performed by a language interpret part 81 of the controller 11 in the printer 3.

### DETAILED DESCRIPTION OF THE PREFERRED EMBODIMENT

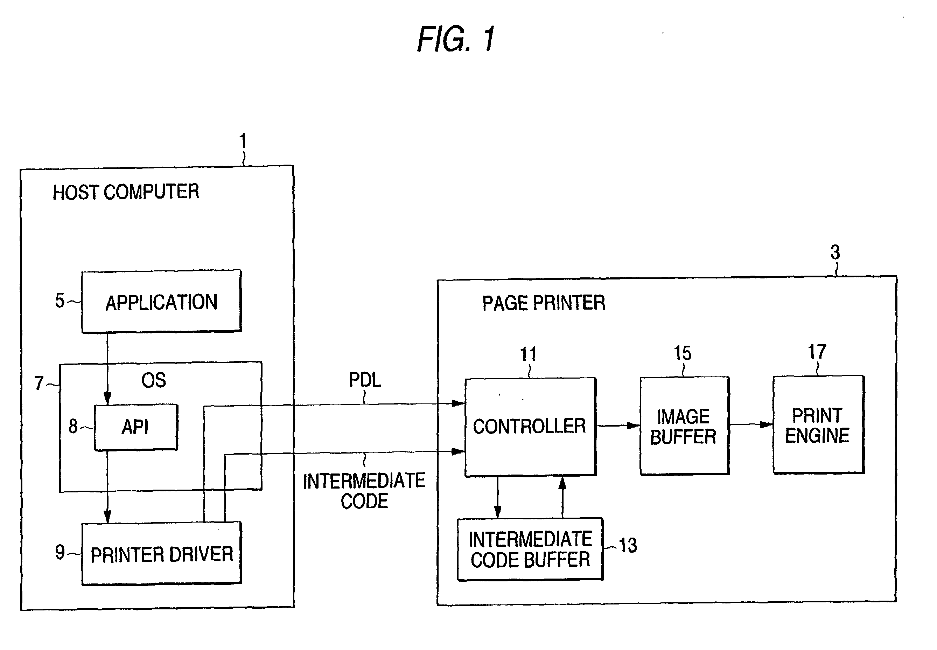

Fig. 1 shows the overall structure of an embodiment of a print system according to the invention.

The present print system includes a host computer 1 and a page printer 3 connected to the host computer 1. In the host computer 1, an application program 5 notifies the start of a new print job to a plotting module (which is hereinafter referred to as "an application programming interface (API) module") 8 provided within an operating system (OS) 7, and sends the call of the plotting function of the API to the API module 8. In response to this, the API module 8 sends a printer driver 9 the call of the plotting function of the printer driver 9 (which is hereinafter referred to as "a device driver interface (DDI) call").

The printer driver 9 converts the DDI call into a print command in an output format which can be recognized by the page printer 3. The output format includes two kinds of output formats. One of them is a high-level language which is generally referred to as a printer control language and, in the present embodiment, this corresponds to a Page Description Language (PDL). The other output format is an intermediate (IM) code which is described in an Intermediate Language (IML). This intermediate code is basically the same format as an intermediate code which is generated from PDL by a controller 11 provided in the page printer 3, but they are a little different in the details from each other. Hereinafter, in order to distinguish them from each other, the intermediate code to be generated by the printer driver 9 is referred to as a driver intermediate (DIM) code, whereas the intermediate code to be generated by the page printer 3 is referred to as a printer intermediate (PIM) code.

The DIM code is different from the PIM code mainly in that it includes image bit map data on characters and bit images. That is, when a certain band, with characters and bit images drawn therein, is described in an intermediate code, within the printer, the bit map data on the respective characters and bit images are placed in other memory areas than the PIM code, while pointers to the respective characters and bit images in these memory areas are described in the PIM code. On the other hand, in the DIM code, there are placed not only the characters and bit images but also the bit map data on such characters and bit images. In this case, in order to avoid the repetition of the bit map data, for example, the following format can be employed. That is, only when the characters and bit images appear for the first time within the band, the bit map data on the characters and bit images are placed or registered in the DIM code together with the identification numbers and the size specifications thereof and, next, the identification numbers of the characters and bit images, the coordinates thereof within the band, the specifications of the actually used portions of the thus registered bit map data, and the like are described. After that, each time the same characters and bit images appear again within the same band, the identification numbers of the characters and bit images, the coordinates thereof within the band, the specifications of the actually used portions of the thus registered bit map data are described.

Also, generally, the PIM code within a printer supports a great variety of plotting functions. On the other hand, the DIM code must be matched to the function of the DDI that is supplied by the OS 7 and, therefore, if the function of the DDI is more limited than the function of the PIM code, for example, in the passes, graphics parameters, kinds of coordinate conversion function calls and the like, then the function of the DIM code is similarly more limited than the function of the PIM code in the above-mentioned respects.

The print command from the printer driver 9 is sent through the OS 7 to the printer 3. In the printer 3, the controller 11 interprets the print command and converts it into a PIM code. Here, when the controller 11 receives a print command expressed in the PDL, the controller 11 interprets the PDL command and converts it into a PIM code according to the same procedure as a conventional printer follows. On the other hand, on receipt of a DIM code, the controller 11 generates a PIM code by means of very simple conversion (that is, a conversion which merely cancels the above-mentioned differences). Therefore, the amount of processing of the controller 11 is very small when it receives the DIM code.

The controller 11 stores the thus generated PIM code into the intermediate code buffer 13. Also, in synchronization with the operation of the print engine 17, the controller 11 creates bit image data from the PIM code stored in the intermediate code buffer 13 and develops it to the image buffer 15. Here, under a specific condition that the bit map data is more advantageous than the PIM code in the amount of memory required and/or processing speed, the controller 11 pre-develops the PIM code to the bit map image before it develops the same to the image buffer 15.

The print engine 17 reads out the bit map image from the image buffer 15 and prints it on a printing sheet.

Here, the page printer 3 may include a receive buffer which is capable of provisionally storing a print command from the host computer 1.

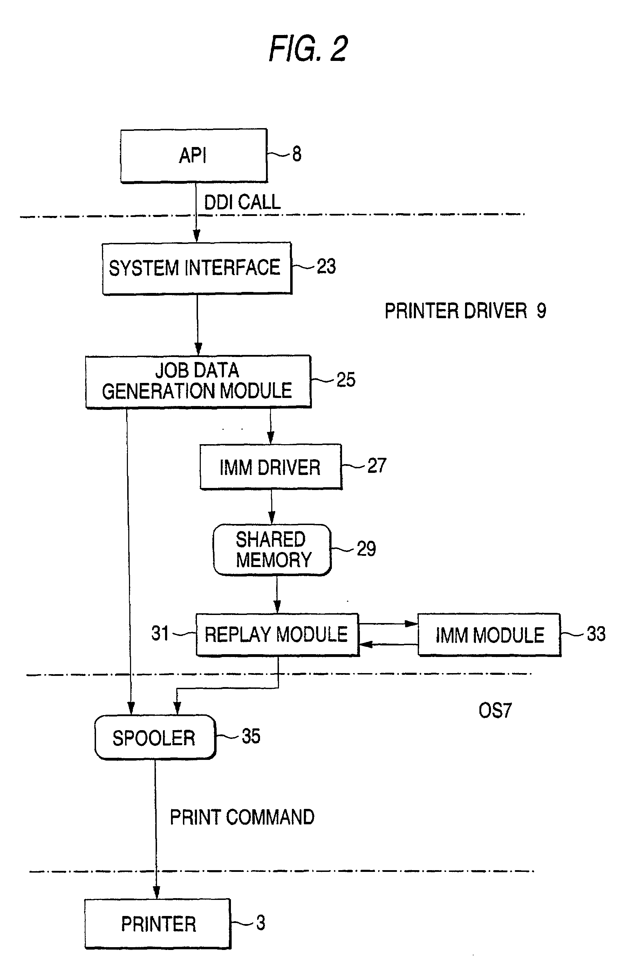

Fig. 2 shows the functional structure of the printer driver 9 included in the host computer 1.

A system interface 23, on receipt of a DDI call for a new print job from the API 8, decides a page mode and then allows a job data generation module 25 to execute a plotting processing in accordance with the DDI call. Here, "to decide a page mode" means to decide whether the output format of a print command to be output to the printer is a PDL format or a DIM code format. A mode to output the print command in the PDL format is referred to as a "printer page mode", whereas a mode to output the print command in the DIM code format is referred to as a "driver page mode". A method for deciding the page mode will be described in detail later.

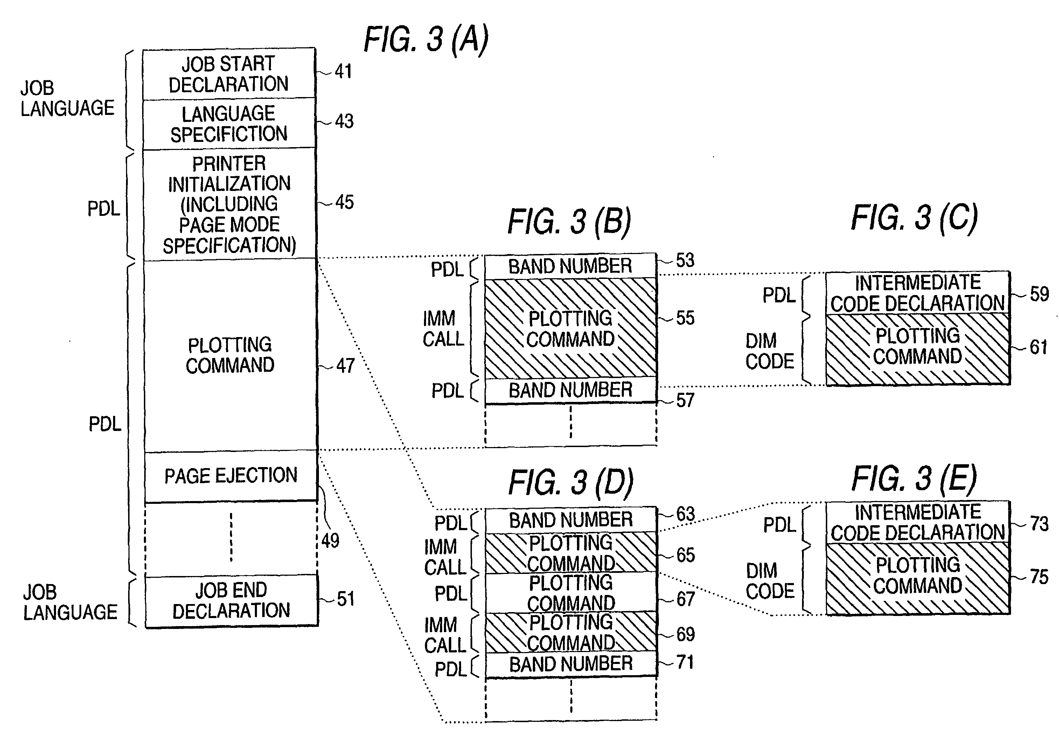

In the printer page mode, the job data generation module 25 executes a plotting processing which corresponds to a DDI call delivered from the system interface 23 and, as a result of this, a print command chain relating to a print job (which is hereinafter referred to as job data) is generated in such format as shown in Fig. 3 (A).

The job data shown in Fig. 3 (A) starts with a job start declaration 41, and a language specify command 43 and a printer initialize command 45 follow sequentially after the job start declaration 41. After that, plotting commands 47 in pages follow, while a page eject command 49 is added to the end of each of the plotting commands 47 in the respective pages. A job end declaration 51 is placed after the last plotting command 47 in the last page, which ends the job data.

The first job start declaration 41, language specify command 43 and the last job end declaration 51 are expressed in a high-level language called a job language which is independent of a printer control language. The language specify command 43 specifies a printer control language to be used in the present job data and, in the present embodiment, a given PDL is specified as the language specify command 43.

Commands 45 to 49 following the language specify command 43 are respectively expressed in a given PDL specified by the language specify command 43. The printer initialize command 45 is used to initialize the environment or state of the printer. In the printer initialize command 45, there is also included the specification of a page mode and, here, a printer page mode is specified.

The plotting command 47 following the printer initialize command 45, as mentioned before, is described in the PDL in pages.

Now, referring again to Fig. 2, such job data as shown in Fig. 3 (A), which is output from the job data generation module 25, is written into a spooler 35 provided within the OS 7. After that, the job data is transmitted from the spooler 35 to the printer 3.

On the other hand, in the case of the driver page mode, with respect to the plotting processing calls for the respective pages among the DDI calls delivered from the system interface 23, instead of the job data generation module 25, there is invoked an IMM driver 27 and the IMM driver 27 generates a function call (which is hereinafter referred to as "an IMM call") with respect to an intermediate code generation module (which is hereinafter referred to as "an IMM module") which will be discussed later. As a result of this, among the job data shown in Fig. 3 (A), the portions of the respective pages that correspond to the plotting commands 47 are respectively expressed in the form of IMM calls not in the form of the PDL.

Fig. 3 (B) shows an example of the plotting command that is expressed in the IMM call and, in this example, a page is divided into one or more bands and the plotting command 55 of each band is expressed in the IMM call. To the heads of the plotting commands 55 of the respective bands, there are attached band number declarations 53 which show the start of the respective bands. The band number declarations 53 are respectively expressed in the PDL.

Therefore, from the IMM driver 27, there are output job data in a format obtained by replacing the portions of the job data of Fig. 3 (A) that correspond to the plotting commands 47 of the respective pages with such expressions as are shown in Fig. 3 (B). By the way, in the present job data, the driver page mode is specified within the printer initialize command 45.

The job data from the IMM driver 27 is delivered through shared memory 29 to a replay module 31. Here, delivery of the job data to the replay module 31 is basically executed through the shared memory 29 but, in the case of the job data having a large record size, the job data is arranged as a file and the name of the file is written into the shared memory 29.

The replay module 31 passes-therethrough the portions of the job data that are expressed in the job language and PDL, that is, the job start declaration 41, language specify command 43, printer initialize command 45, band number declaration 53 and page eject command 49 respectively shown in Figs. 3 (A) and (B), as they are, and writes them into the spooler 35.

On the other hand, with respect to the plotting command 55 in the format of the IMM call shown in Fig. 3 (B), the replay module 31 calls the plotting function of the IMM module 33. The plotting function of the IMM module 33 converts the present plotting command 55 to a DIM code (that is, a driver intermediate code).

Fig. 3 (C) shows an example of a plotting command 61 included in each of the bands and converted to the DIM code and, to the head of the plotting command 61, there is attached a declaration 59 indicating that the plotting command 61 is an intermediate code (that is, binary data). This intermediate code declaration 59 is expressed in the PDL.

Therefore, from the replay module 31, there is output job data in the format that is obtained by replacing the plotting command 47 of each page of the job data shown in Fig. 3 (A) with one shown in Fig. 3 (B) and further by replacing the plotting command 55 of each band shown in Fig. 3 (B) with one shown in Fig. 3 (C).

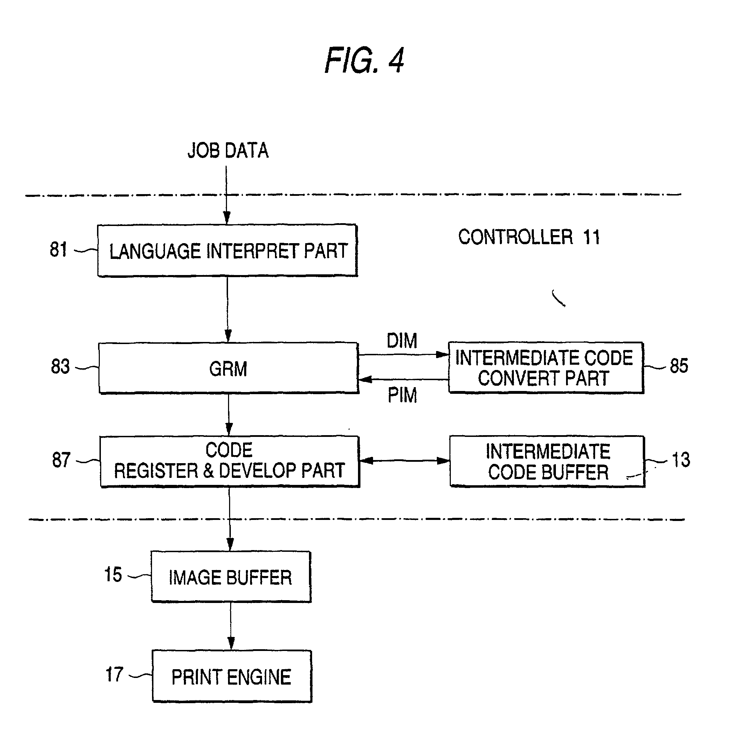

Fig. 4 shows the functional structure of the controller 11 of the printer 3.

In the controller 11, on receipt of the job data, at first, a language interpret part 81 interprets a command included in the job data and expressed in a job language and PDL and, in accordance with the interpretation result, calls the plotting function of a graphics module (which is hereinafter referred to as "GRM"). When the DIM code is included in the job data, the language interpret part 81 calls an intermediate code conversion part 85 through the GRM 83 and hands the DIM code over to the intermediate code conversion part 85.

The GRM 83 has a function to generate a PIM code (a printer intermediate code) in accordance with a plotting command expressed in the PDL. Also, the intermediate code conversion part 85 is a function which is added to the GRM 83 in order to convert the DIM code to the PIM code. Here, a processing for converting the DIM code to the PIM code is very simple when compared with a processing to be performed by the GRM 83, as was described before.

Therefore, for the printer page mode, in accordance with the result of the interpretation by the language interpret part 81, the GRM 83 generates a PIM code. On the other hand, for the driver page mode, the intermediate code conversion part 85 generates the PIM code from the DIM code included in the job data by means of simple conversion. Here, when it is more advantageous to convert the DIM code to bit map data from the beginning than to convert the DIM code to the PIM code, the DIM code may also be pre-developed to the bit map data.

In both modes, the generated PIM code is delivered from the GRM 83 to a PIM code register & develop part 87. The PIM code register & develop part 87 registers the PIM code in the intermediate code buffer 13 and, in synchronization with the operation of the print engine 17, reads out the PIM code from the intermediate code buffer 13 and develops a bit map image on the image buffer 15 in accordance with the read-out PIM code.

Now, description will be given below in more detail of the operation of the above-mentioned structure.

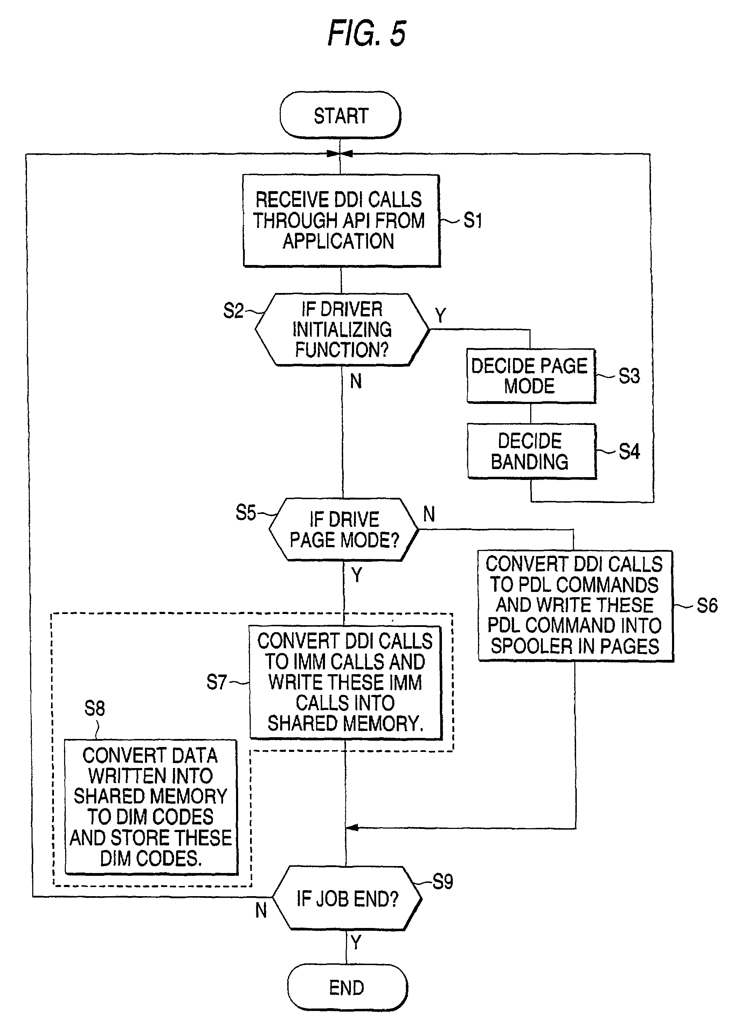

Fig. 5 shows a flow chart of the overall flow of the processing to be performed by the printer driver 9.

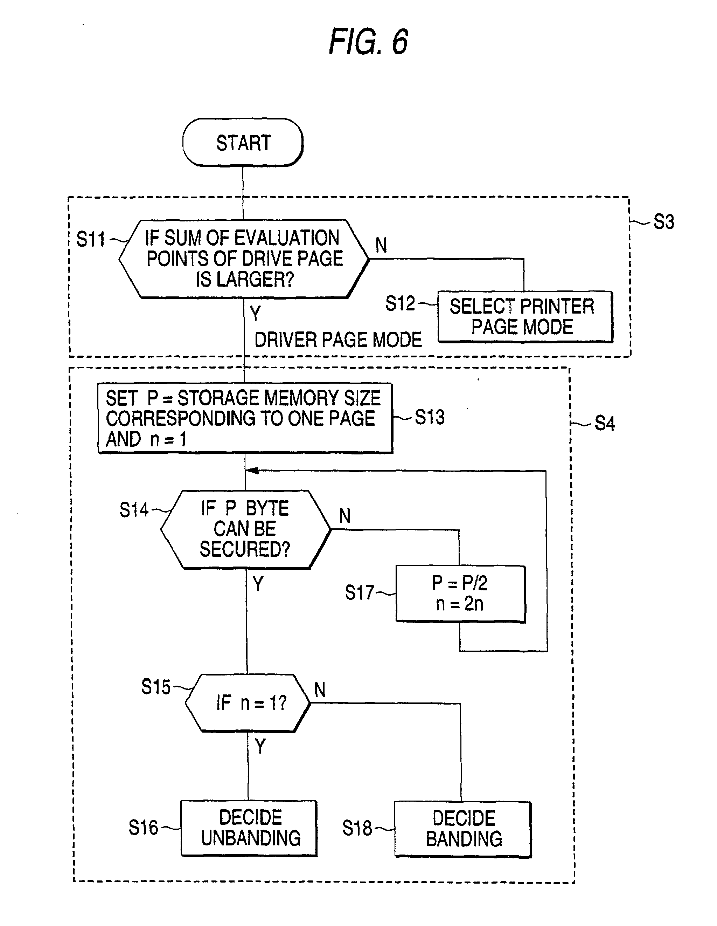

At first, the printer driver 9 receives the DDI call from the API 8 (S1), if the initialize function of the driver 9 is invoked by the present DDI call (Y in S2), then not only is page mode decided (S3) but also banding (S4) is decided in the present initialize processing. These decisions are executed according to the flows that are respectively shown in Fig. 6.

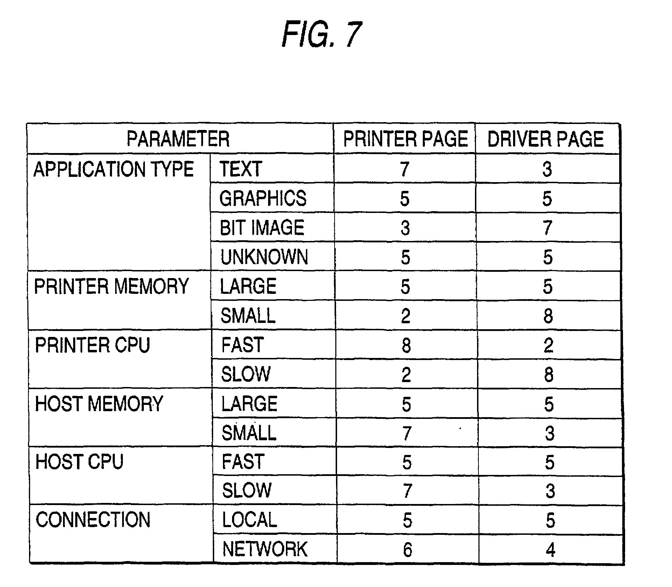

As shown in Fig. 6, in the operation mode decision processing (S3), at first, evaluation points are calculated with respect to the printer page mode and driver page mode, and page mode is selected which has the greater evaluation points (S11, S12). Here, the calculation of the evaluation points is executed according to an evaluation point table which, as shown in Fig. 7, shows the evaluation points of the respective modes with respect to various parameters.

In the example shown in Fig. 7, as the parameters, there are available an application type, a printer memory size, a printer CPU speed, a host computer size, a host computer CPU speed, a connection form between the host and printer, and the like. Here, the term "application type" is used to distinguish the types of the applications 5 from each other. That is, whether the application 5 is an application of a type that is mainly used to handle characters (such as a text editor, a word processor, or the like), a type that is mainly used to handle graphics forms (such as CAD, draw-system graphics, or the like), or a type that is mainly used to handle images (such as photo-retouch, paint-system graphics, or the like).

As can be seen from Fig. 7, the parameters can be evaluated in the following manner. That is, when the quantity of data to be processed is large or the power of a printer is low, the evaluation point of the driver page mode is high. On the other hand, when the quantity of data to be processed is small or the capability of a host computer is low, the evaluation point of the printer page mode is high. The evaluation points of these parameters are summed up for each of the two modes and the sum values of the evaluation points of the two modes are compared with each other. The mode that is found higher in the sum value is selected.

By the way, when the present print job is to plot characters using fonts prepared within the printer, the following technique can also be employed.

That is, as shown in Fig. 3 (D), in this technique, it is arranged that certain plotting commands 65 and 69 in one band are expressed in the IMM call, the other command 67 is expressed in the PDL and, after that, as shown in Fig. 3 (E), the IMM calls 65 and 69 are converted to a DIM code 75. Under this arrangement, when there is included a command to plot characters using the printer fonts, the command 67 is expressed in the PDL as conventionally and thus the command 67 is allowed to exist together with the plotting commands 65 and 69 expressed in the IMM call. For this reason, although the portion of the command to plot characters using the printer fonts can be processed only at the same speed as the conventional processing speed, the other portions thereof are allowed to generate intermediate codes on the printer driver side, with the result that the present print job as a whole can be processed at high speed.

Also, as an alternative method, it is also possible to rewrite the command for plotting characters using the printer fonts into a command which plots characters using fonts provided on the host computer side. This makes it possible to handle the present command in the same manner as the other plotting commands 65 and 69 expressed in the IMM call, so that an intermediate code can be generated on the printer driver side.

Now, referring again to Fig. 6, if the driver page mode is selected, then the banding decision processing (S4) is executed. At first, the number of bytes of a memory necessary to store DIM codes corresponding to one page is estimated, the estimated byte number is set in a variable P, and the initial value 1 of the band number is set in a variable n (S13). Next, it is checked whether a P byte memory can be actually secured or not (S14). If it is found that n=1, then an unbanding processing (that is, a page is not divided into two or more bands but is processed as a band) is decided (S16). Here, the larger the size of the P byte is, the less frequently the plotting element is divided, which reduces the number of times of replay to thereby reduce the driver processing time, resulting in improved performance of the overall processing.

On the other hand, when the P byte cannot be secured, P is divided by 2 and n is doubled (S17) and, after that, it is checked whether or not the P byte can be secured (S13). If the P byte cannot be secured, then P is divided by 2 and n is doubled again (S17). This operation is executed repeatedly until the P byte can be secured. If the P byte can be secured, then the memory area of the P byte is secured as a buffer for the DIM code and there is decided such a banding processing as can divide a page by the band number that is indicated by the current n (S18).

By the way, in the case of the printer page mode, since the plotting contents are described in the PDL in pages, an unbanding processing is inevitably decided.

Referring again to Fig. 5, after the above-mentioned driver initialization procedure is ended, depending on whether the mode is the printer page mode or driver page mode (S5), as described before, the main operation of the plotting processing is assigned to the job generation module 25 or IMM driver 27. That is, if the mode is the printer page mode, then the plotting function of the job generation module 25 is called by the plotting DDI call, plotting commands in the PDL are thereby generated, and the thus generated PDL commands are respectively written into the spooler 35 in pages (S6).

On the other hand, for the driver page mode, the function of the IMM driver 27 is invoked by the plotting DDI call, a function call for the IMM module 33 is thereby generated, and the thus generated function call is then written into the shared memory 29 (S7). Also, asynchronously with the writing of the function call into the shared memory 29, in response to an IMM function call within the shared memory 29, the replay module 31 calls the IMM module 33, generates a DIM code, and writes the thus generated DIM code into the spooler 35 (S8). The above-mentioned processing is performed repeatedly until a DDI call indicating the end of the job appears (S9).

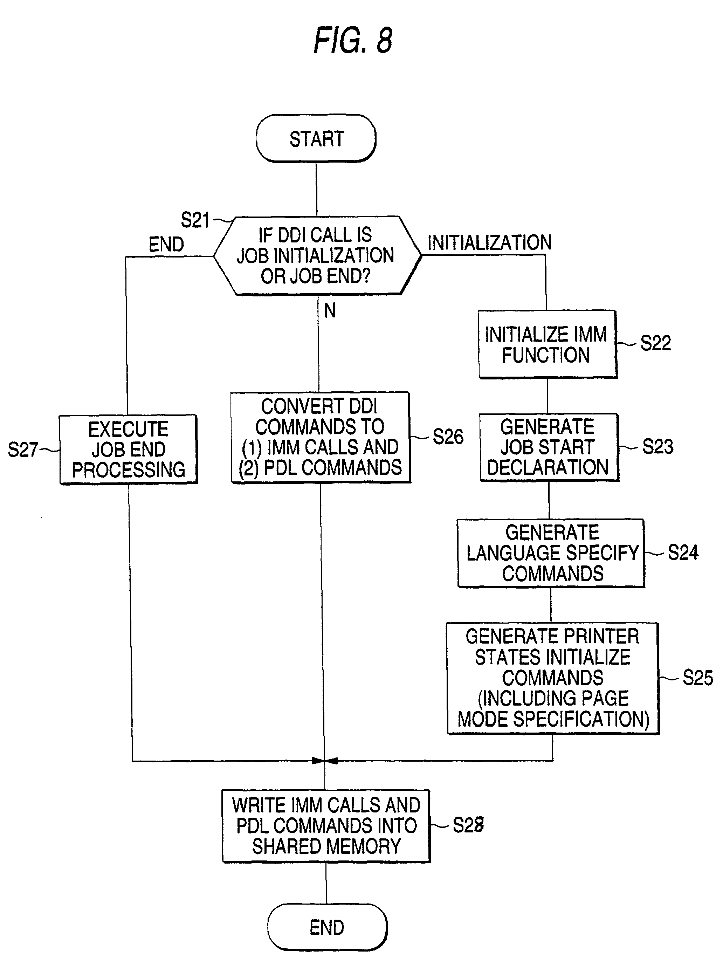

Fig. 8 shows the details of the above-mentioned processing to be performed in Step S7 shown in Fig. 5. This processing is executed by the job data generation module 25 and IMM driver 27 shown in Fig. 2.

At first, a DDI call for initialization of the print job is received (S21). In response to this, there are generated not only a command for initialization of the function of the IMM module 33, but also the start declaration 41, language specify command 43 and printer initialize command 45 (including the specification of the page mode) respectively shown in Fig. 3 (A) (S22 to S25), and they are written into the shared memory 29 (S28). After that, a DDI call for the plotting processing of each page is received. In response to this, for every band within each page, there are generated the plotting command 55 in the form of an IMM call and band number declarations 53 and 57 expressed in the PDL, which are respectively shown in Fig. 3 (B), and they are then written into the shared memory 29 (S28). Finally, a DDI call for ending the job is received and, in response to this, there is generated the job end declaration 51 shown in Fig. 3 (A) (S27), and the thus generated job end declaration 51 is written into the shared memory 29 (S28).

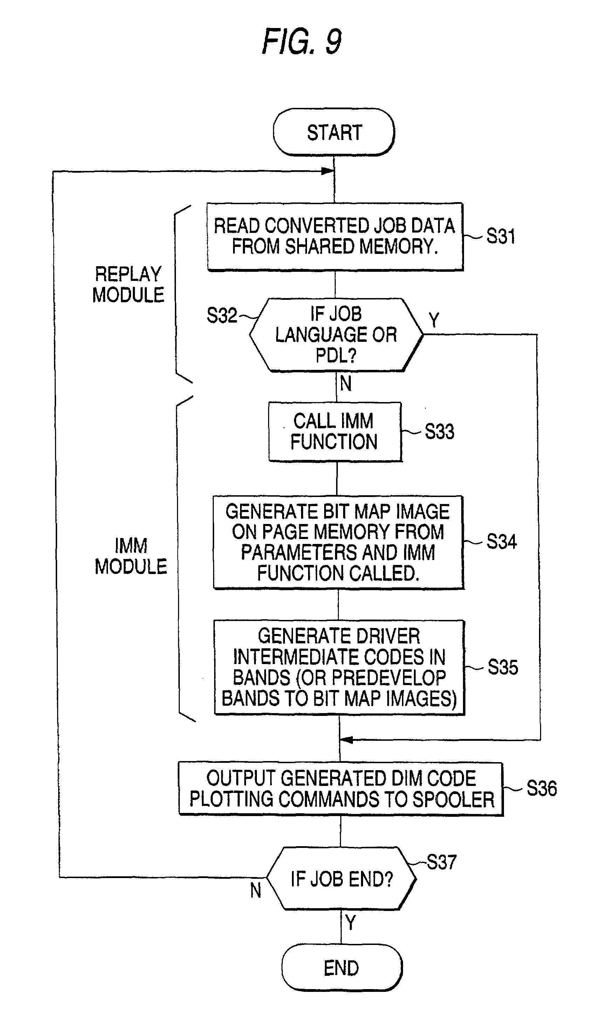

Fig. 9 shows the details of the processing to be performed in Step S8 shown in Fig. 5. This processing is executed by the replay module 31 and IMM module 33 shown in Fig. 2.

First, the replay module 31 reads out job data from the shared memory 29 (S31) and checks whether or not a command included in the thus read-out job data is a command described in a job language or a command described in the PDL (S32). Then, if it is found that the command in the job data is described in the job language or PDL, then the command, as it is, is output to the spooler 35 (Y in S32). On the other hand, for an IMM call in the job data, there is invoked a plotting function which is stored in the IMM module 33 and corresponds to the IMM call (S33), and a plotting processing is executed using the parameters of the present IMM call (S34). In the plotting processing, at first, bit map data on characters and bit images are developed onto a previously secured page memory (or band memory) (S34) and, in bands, there are generated such plotting commands 61 in the form of DIM codes as shown in Fig. 3 (C) (S35). In this operation, according to the case, as described before, the respective bands may be pre-developed to the bit map images not in the form of DIM codes. After that, the thus generated DIM code plotting commands 61 are output to the spooler 35 (S36). The above-mentioned processing is performed repeatedly until the last portion of the job data is finished (S37).

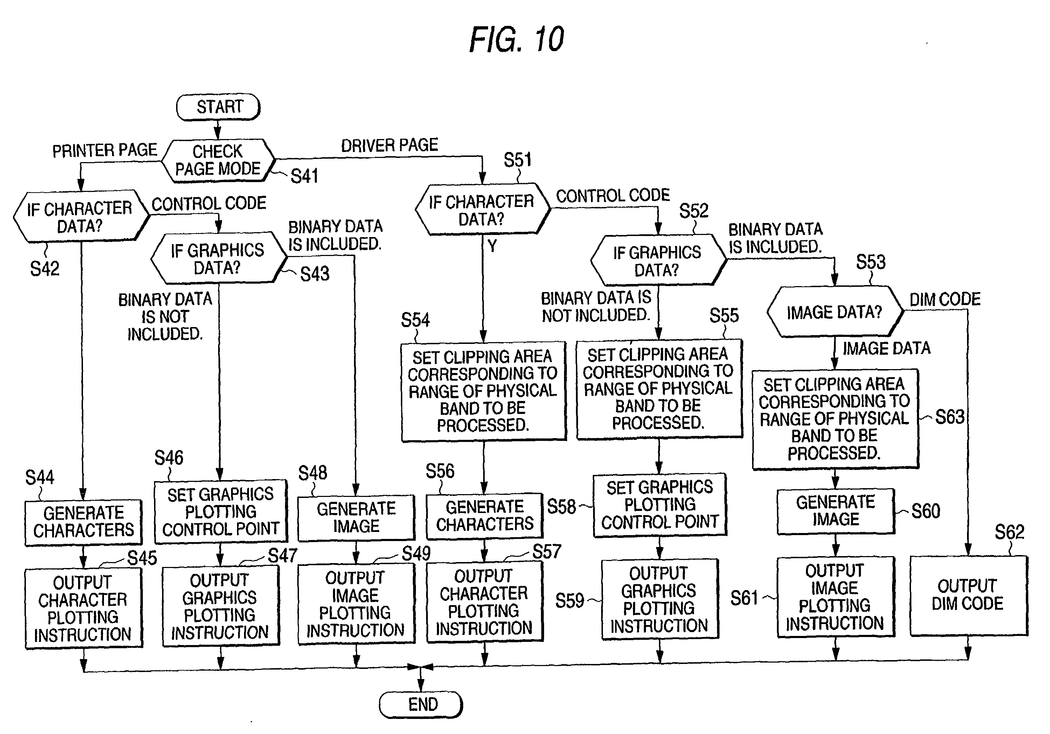

Fig. 10 shows the details of the processing to be performed by the language interpret part 81 of the controller 11 provided within the printer, which is already shown in Fig. 4.

At first, it is checked from the page mode specification of the job data received from the host computer 1 whether the page mode is a printer page mode or a driver page mode (S41). If the printer page mode is specified, then the respective plotting commands of the job data expressed in the PDL are interpreted and it is checked from the results of such command interpretation whether each plotting command is a command to plot characters or not (that is, whether it includes character data or not) (S42), or a command to plot bit images or not (whether it includes binary data or not) (S43), or a command to plot graphics (figures) or not (whether it includes graphics data or not), that is, (whether it includes neither character data nor binary data or not).

If the command to plot characters is received, then the bit map data of the characters are generated (S44) and, then a character plotting instruction is given to GRM 83 (S45). If the command to plot graphics is received, then the plotting control point of the graphics is set (S46) and, after that, a graphics plotting instruction is given to the GRM 83 (S47). If the command to plot bit images is received, then the bit map data of the bit images is created (S48) and, then an image plotting instruction is given to the GRM 83 (S49). In accordance with such plotting instruction, the GRM 83 generates a PIM code and then writes the same into the intermediate code buffer 13.

On the other hand, if the driver page mode is specified, then the plotting command in the form of a DIM code, as it is, is output to the GRM 83 (S62). In response to this, as described before, the GRM 83 invokes the intermediate code convert part 85 to thereby convert the DIM code to the PIM code. This conversion processing is so simple that it can be executed at a high speed.

As described above, in the present embodiment, for each print job, the printer page mode or driver page mode is selected and, for the driver page mode, the plotting command is converted to the intermediate code by the printer driver before it is supplied to the printer. This relieves the processing burden of the printer to thereby be able to enhance the processing speed of the printer. Therefore, by selecting the driver page mode properly according to the state of the entire system, the processing speed of the whole system can be improved.

By the way, in the above-mentioned embodiment, in the driver page mode, the plotting commands of all pages are expressed in the intermediate code form. However, the invention is not always limited to this but, for example, some pages may be expressed in the intermediate code, whereas the other pages may be expressed in the PDL. That is, the intermediate code conversion processing may be controlled in pages. Or, the intermediate code conversion processing may be controlled in applications.

Also, the above conversion processing can be controlled in bands or in commands. In particular, when the processing is controlled in bands, for example, the plotting commands of certain bands are converted to the IMM code as shown in Figs. 3 (B) and (C) before they are converted to the DIM code, whereas the plotting commands of the other bands are expressed in the PDL. On the other hand, when the processing is controlled in commands, at first, as shown in Fig. 3 (D), certain commands 65 and 69 in a band are expressed in the IMM call and the other band 67 is expressed in the PDL and, then, as shown in Fig. 3 (E), the IMM calls 65 and 69 are converted to the DIM code 75.

As mentioned above, when, in the driver page mode, the plotting commands expressed in the PDL and in the DIM code are allowed to be present together in one piece of job data. In the language processing by the printer shown in Fig. 10, there are necessary steps (S51, S52, S53) to distinguish the plotting commands expressed in the DIM code from the plotting commands expressed in the PDL. That is, in the driver page mode, if the PDL command to plot characters is received (Y in S51), then a clipping area corresponding to the range of a physical band to be processed is firstly set (S54), the bit map data on the characters is then generated (S56), and a character plotting instruction is given to the GRM 83 (S57). Also, if the command to plot graphics is received, similarly, a clipping area corresponding to the range of a physical band to be processed is firstly set (S55), the plotting control point of the graphics is then set (S58) snd, after that, a graphics plotting instruction is given to the GRM 83 (S59). Further, if the command to plot bit images is received, similarly, a clipping area corresponding to the range of a physical band to be processed is firstly set (S63), the bit map data on the bit images is created (S60) and, after that, an image plotting instruction is given to the GRM 83 (S61). On the other hand, if the command expressed in the intermediate code is received, then the command, as it is, is delivered to the GRM 83 (S62).

It should be noted here that the invention is not limited to the above-mentioned embodiment but other embodiments, which include changes, improvements, modifications and the like with respect to the above-mentioned embodiment, are also possible.

## Claims

1. A print system comprising a host computer (1) and a printer (3) connected to, the host computer (1), wherein said host computer (1) includes a printer driver (9) used to generate print job data including plotting commands (47) to be given to said printer (3) **characterised in that** the printer driver (9) includes intermediate level print job data generation means (27) used to generate intermediate level print job data (53, 55, 57) including plotting commands (55) at least part of which is expressed in a first intermediate code format (DIM), and said printer (3) includes intermediate code convert means (83, 85) used to receive said intermediate level print job data (53, 55, 57) and convert said plotting commands (55) to a second intermediate code format (PIM) and further convert means (87) used to convert the plotting commands expressed in said second intermediate code format (PIM) to bit map image data for printing.

2. A print system as set forth in claim 1, **characterised in that** said intermediate level print job data (53, 55, 57) includes specification information specifying which plotting commands (67) are expressed in said first intermediate code format (DIM) and said intermediate code convert means (83, 85) distinguishes said plotting commands (67) in said first intermediate code format (DIM) from others (65, 69) in accordance with said specification information.

3. A print system as set forth in claim 1, **characterised in that** said printer driver (9) further includes high-level print job data generation means (25) used to generate high-level print job data (41-51) including plotting commands (47) all of which are expressed in a high-level printer control language, and mode select means used to select one of said intermediate level print job data generation means (27) and said high-level print job data generation means (25) and further **characterised in that** said printer (3) further includes graphics means used to receive said high-level print job data (41-51) and convert said plotting commands (47) expressed in said high-level printer control language to said second intermediate format (PIM).

4. A print system as set forth in claim 3, **characterised in that** said mode select means automatically selects one of said intermediate level print job data generation means (27) and said high-level print job data generation means (25) for each print job, each page, each band, each plotting command, and each application program.

5. A print system as set forth in claim 3, **characterised in that** said mode select means always selects said high-level job data generation means (25) when a print job uses fonts provided internally in said printer (3).

6. A print system as set forth in claim 1, **characterised in that** said first intermediate code format (DIM) includes bit map image data on characters or images to be plotted, whereas said second intermediate code format (PIM) does not include bit map image data on characters or images to be plotted.

7. A print system as set forth in claim 1, wherein said intermediate level print job data generation means (27) includes pre-develop means used to pre-develop bit map image data from said plotting commands (55) expressed in said first intermediate code format (DIM).

8. A printing method using a host computer (1) and a printer (3) connected to the host computer (1), said method **characterised by** the following steps:
generating, in said host computer (1) intermediate level print job data including plotting commands (55) which are to be given to said printer (3) and at least part of which is expressed in a first intermediate code format (DIM) and then transmitting said generated print job data to said printer (3);
receiving, in said printer (3), said intermediate level print job data and converting (S7) said plotting commands (55) to a second intermediate code format (PIM); and
converting, in said printer, the plotting commands expressed in said second intermediate code format (PIM) to bit map image data for printing.

9. A printer driver for generating print job data including plotting commands (47) to be given to a printer (3) **characterised in that** the printer driver (9) includes intermediate level print job data generation means (27) used to generate intermediate level job data including plotting commands (55) at least part of which is expressed in a first intermediate code format (DIM).

10. A printer driver as set forth in claim 9, **characterised by** high-level print job data generation means (25) for generating high-level print job data including plotting commands (47) all of which are expressed in a high-level printer control language, and mode select means for selecting one of said intermediate level print job data generation means (27) and said high-level print job data generation means (25).

11. A program medium carrying a printer driver computer program for generating print job data including plotting commands (47) to be given to a printer, **characterised in that** said program medium carries a group of instructions for generating intermediate level print job data including plotting commands (55), at least part of which is expressed in a first intermediate code format (DIM), in such a manner that said group of instructions can be read and understood by a computer (1).

12. A printer (3), **characterised by**:
means for receiving intermediate level print job data including plotting commands at least part of which is expressed in a first intermediate code format (DIM);
intermediate code convert means (83, 85) for converting said plotting commands expressed in said first intermediate code format (DIM) to a second intermediate code format (PIM); and
further convert means (87) for converting the plotting commands expressed in said second intermediate code format (PIM) to bit map image data for printing.

13. A printer as set forth in claim 12, **characterised by** graphics means for, when said plotting commands of said received print job data are expressed in a high-level printer control language, converting said plotting commands (47) in said high-level printer control language to said second intermediate code format (PIM).

## Patentansprüche

1. Druck-System, welches einen Host-Rechner (1) und einen mit dem Host-Rechner (1) verbundenen Drucker (3) umfaßt, worin der Host-Rechner (1) einen Drucker-Treiber (9) umfaßt, welcher benutzt wird, um Druck-Job-Daten zu erzeugen einschließlich Plott-Befehlen (47), welche zu dem Drucker (3) gegeben werden,
**dadurch gekennzeichnet, daß**
der Drucker-Treiber (9) Zwischen-Level-Druck-Job-Daten-Erzeugungs-Mittel (27) umfaßt, welche benutzt werden, um Zwischen-Level-Druck-Job-Daten (53,55,57) einschließlich Plott-Befehlen (55) zu erzeugen, von denen zumindest ein Teil in einem ersten Zwischen-Kode-Format (DIM) ausgedrückt ist, und der Drucker (3) Zwischen-Kode-Konvertierungs-Mittel (83, 85) umfaßt, welche benutzt werden, um die Zwischen-Level-Druck-Job-Daten (53,55,57) zu empfangen und die Plott-Befehle (55) zu einem zweiten Zwischen-Kode-Format (PIM) zu konvertieren und weitere Konvertierungsmittel (87), welche benutzt werden, um die in dem zweiten Zwischen-Kode-Format (PIM) ausgedrückten Plott-Befehle zu Bitmap-Bild-Daten für das Drucken zu konvertieren.

2. Druck-System nach Anspruch 1, **dadurch gekennzeichnet, daß** die Zwischen-Level-Druck-Job-Daten (53,55,57) eine Spezifizierungs-Information umfassen, welche spezifizieren, welche Plott-Befehle (67) in dem ersten Zwischen-Kode-Format (DIM) ausgedrückt sind, und die Zwischen-Kode-Konvertierungs-Mittel (83,85) die Plott-Befehle (67) in dem ersten Zwischen-Kode-Format (DIM) von anderen (65,69) gemäß der Spezifizierungs-Information unterscheiden.

3. Druck-System nach Anspruch 1, **dadurch gekennzeichnet, daß** der Drucker-Treiber (9) weiterhin High-Level-Druck-Job-Daten-Erzeugungs-Mittel (25) umfaßt, welche benutzt werden, um High-Level-Drucker-Job-Daten (41-51) einschließlich Plott-Befehlen zu erzeugen, welche alle in einer High-Level-Drucker-Steuer-Sprache ausgedrückt sind, und Betriebsart-Auswahl-Mittel, welche benutzt werden, um eines der Zwischen-Level-Druck-Job-Daten-Erzeugungs-Mittel (27) und High-Level-Druck-Job-Daten-Erzeugungs-Mittel (25) zu selektieren und weiterhin **dadurch gekennzeichnet, daß** der Drucker (3) weiterhin Grafik-Mittel umfaßt, welche benutzt werden, um die High-Level-Druck-Job-Daten (41-51) zu empfangen und die Plott-Befehle (41), welche in der High-Level-Drucker-Steuer-Sprache ausgedrückt sind, zu dem zweiten Zwischen-Format (PIM) zu konvertieren.

4. Druck-System nach Anspruch 3, **dadurch gekennzeichnet, daß** die Betriebsart-Auswahl-Mittel, automatisch eines der Zwischen-Level-Druck-Job-Daten-Erzeugungs-Mittel (27) und High-Level-Druck-Job-Daten-Erzeugungs-Mittel (25) für jeden Druck-Job, jede Seite, jedes Band, jeden Plott-Befehl und jedes Anwendungsprogramm zu selektieren.

5. Druck-System nach Anspruch 3, **dadurch gekennzeichnet, daß** das Betriebsart-Auswahl-Mittel immer die High-Level-Druck-Job-Daten-Erzeugungs-Mittel (25) selektiert, wenn ein Druck-Job in dem Drucker (3) intern zur Verfügung gestellte Zeichensätze benutzt.

6. Druck-System nach Anspruch 1, **dadurch gekennzeichnet, daß** das erste Zwischen-Kode-Format (DIM) Bitmap-Bild-Daten von Zeichen oder Bildern, welche zu plotten sind, umfaßt, wohingegen das zweite Zwischen-Kode-Format (PIM) keine Bitmap-Bild-Daten von Zeichen oder Bildern, welche zu plotten sind, umfaßt.

7. Druck-System nach Anspruch 1, worin das Zwischen-Level-Druck-Job-Daten-Erzeugungs-Mittel (27) ein Vorentwickel-Mittel umfaßt, welches benutzt wird, Bitmap-Bild-Daten aus den Plott-Befehlen (55) vorzuentwickeln, welche in dem ersten Zwischen-Kode-Format (DIM) ausgedrückt sind.

8. Druckverfahren, welches einen Host-Rechner (1) und einen mit dem Host-Rechner (1) verbundenen Drucker (3) benutzt, wobei das Verfahren durch folgende Schritte gekennzeichnet ist:
Erzeugen von Zwischen-Level-Druck-Job-Daten in dem Host-Rechner (1) einschließlich Plott-Befehlen (55), welche zu dem Drucker (3) gegeben werden sollen und von denen mindestens ein Teil in einem ersten Zwischen-Kode-Format (DIM) ausgedrückt ist und dann Übertragen der erzeugten Druck-Job-Daten zu dem Drucker (3);
Empfangen von den Zwischen-Level-Druck-Job-Daten in dem Drucker (3) und Konvertieren (S7) der Plott-Befehle (55) zu einem zweiten Zwischen-Kode-Format (PIM); und
Konvertieren der in dem zweiten Zwischen-Kode-Format ausgedruckten Plott-Befehle in dem Drucker zu Bitmap-Bild-Daten für das Drucken.

9. Drucker-Treiber zum Erzeugen von zu einem Drucker (3) zu gebenden Druck-Job-Daten einschließlich Plott-Befehlen (47), **dadurch gekennzeichnet, daß** der Drucker-Treiber (9) Zwischen-Level-Druck-Job-Daten-Erzeugungs-Mittel (27) umfaßt, welche benutzt werden, um Zwischen-Level-Job-Daten einschließlich Plott-Befehlen (55) zu erzeugen, von denen mindestens ein Teil in einem Zwischen-Kode-Format (DIM) ausgedrückt ist.

10. Drucker-Treiber nach Anspruch 9, **gekennzeichnet durch** High-Level-Druck-Job-Daten-Erzeugungs-Mittel (25) zum Erzeugen von High-Level-Druck-Job-Daten einschließlich Plott-Befehlen (47), von denen alle in einer High-Level-Drucker-Steuer-Sprache ausgedrückt werden, und Betriebsart-Auswahl-Mittel zum Selektieren eines der Zwischen-Level-Druck-Job-Daten-Erzeugungs-Mittel (27) und High-Level-Druck-Job-Daten-Erzeugungs-Mittel (25).

11. Programm-Medium, welches ein Drucker-Treiber-Rechner-Programm zum Erzeugen von Druck-Job-Daten einschließlich Plott-Befehlen (47) trägt, welche zu einem Drucker gegeben werden sollen, **dadurch gekennzeichnet, daß** das Programm-Medium eine Gruppe von Anweisungen zum Erzeugen von Zwischen-Level-Druck-Job-Daten einschließlich Plott-Befehlen (55) trägt, von denen mindestens ein Teil in einem ersten Zwischen-Kode-Format (DIM) ausgedrückt werden, in einer derartigen Weise, daß die Gruppe von Anweisungen von einem Rechner (1) gelesen und verstanden werden kann.

12. Drucker, **gekennzeichnet durch**:
Mittel zum Empfangen von Zwischen-Level-Druck-Job-Daten einschließlich Plott-Befehlen, von denen mindestens ein Teil in einem ersten Zwischen-Kode-Format (DIM) ausgedrückt ist;
Zwischen-Kode-Konvertierungs-Mittel (83, 85) zum Konvertieren der in dem ersten Zwischen-Kode-Format (DIM) ausgedrückten Flott-Befehle zu einem zweiten Zwischen-Kode-Format (PIM): und
weitere Konvertierungsmittel (87) zum Konvertieren der in dem zweiten Zwischen-Kode-Format (PIM) ausgedrückten Plott-Befehle zu Bitmap-Bild-Daten für das Drucken.

13. Drucker nach Anspruch 12, **gekennzeichnet durch** Grafik-Mittel zum Konvertieren der Plott-Befehle (47) in der High-Level-Drucker-Steuer-Sprache zu dem zweiten Zwischen-Kode-Format (PIM), wenn die Plott-Befehle der empfangenen Druck-Job-Daten in einer High-Level-Drucker-Steuer-Sprache ausgedrückt sind.

## Revendications

1. Système d'impression comprenant un ordinateur hôte (1) et une imprimante (3) connectée à l'ordinateur hôte (1), dans lequel l'ordinateur hôte (1) comporte un pilote d'imprimante (9) utilisé pour créer des données de tâche d'impression qui comprennent des commandes de traçage (47) destinées à être transmises à l'imprimante (3), **caractérisé en ce que** le pilote d'imprimante (9) comporte un dispositif générateur de données de tâche d'impression de niveau intermédiaire (27) utilisé pour la création de données de tâche d'impression de niveau intermédiaire (53, 55, 57) comprenant des commandes de traçage (55) dont une partie au moins est exprimée dans un premier format de code intermédiaire (DIM), et l'imprimante (3) comprend un dispositif de conversion de code intermédiaire (63, 85) utilisé pour recevoir les données de tâche d'impression de niveau intermédiaire (53, 55, 57) et transformer les commandes de traçage (55) à un second format de code intermédiaire (PIM), et un dispositif de conversion supplémentaire (87) utilisé pour transformer les commandes de traçage exprimées dans le second format de code intermédiaire (PIM) en données d'image en mode points pour l'impression.

2. Système d'impression selon la revendication 1, **caractérisé en ce que** les données de tâche d'impression de niveau intermédiaire (53, 55, 57) comprennent des informations de spécification qui spécifient quelles commandes de traçage (67) sont exprimées dans le premier format de code intermédiaire (DIM), et le dispositif de conversion de code intermédiaire (83, 85) distingue les commandes de traçage (67) du premier format de code intermédiaire (DIM) des autres (65, 69) d'après les informations de spécification.

3. Système d'impression selon la revendication 1, **caractérisé en ce que** le pilote d'imprimante (9) comporte en outre un dispositif générateur de données de tâche d'impression de haut niveau (25) utilisé pour la création de données de tâche d'impression de haut niveau (41-51) comprenant des commandes de traçage (47) qui sont toutes exprimées en un langage de commande d'impression de haut niveau, et un dispositif de sélection de mode utilisé pour sélectionner un dispositif parmi le dispositif générateur de données de tâche d'impression de niveau intermédiaire (27) et le dispositif générateur de données de tâche d'impression de haut niveau (25), et **caractérisé en outre en ce que** l'imprimante (3) comporte en outre un dispositif graphique utilisé pour la réception des données de tâche d'impression de haut niveau (41-51) et à transformer les commandes de traçage (47) exprimées dans le langage de commande d'imprimante de haut niveau en second format intermédiaire (PIM).

4. Système d'impression selon la revendication 3, **caractérisé en ce que** le dispositif de sélection de mode sélectionne automatiquement l'un des dispositifs parmi le dispositif générateur de données de tâche d'impression de niveau intermédiaire (27) et le dispositif générateur de données de tâche d'impression de haut niveau (25) pour chaque tâche d'impression, chaque page, chaque bande, chaque commande de traçage et chaque programme d'application.

5. Système d'impression selon la revendication 3, **caractérisé en ce que** le dispositif de sélection de mode sélectionne toujours le dispositif générateur de données de tâche de haut niveau (25) lorsqu'une tâche d'impression utilise des polices présentes à l'intérieur de l'imprimante (3).

6. Système d'impression selon la revendication 1, **caractérisé en ce que** le premier format de code intermédiaire (DIM) contient des données d'image en mode points de caractères ou d'images à tracer, alors que le second format de code intermédiaire (PIM) ne comporte pas de données d'image en mode points relatif à des caractères ou des images à tracer.

7. Système d'impression selon la revendication 1, dans lequel le dispositif générateur de données de tâche d'impression de niveau intermédiaire (27) comprend un dispositif de développement préalable utilisé pour le développement préalable de données d'image en mode points à partir des commandes de traçage (55) exprimées dans le premier format de code intermédiaire (DIM).

8. Procédé d'impression à l'aide d'un ordinateur hôte (1) et d'une imprimante (3) connectéeà l'ordinateur hôte (1), le procédé étant **caractérisé par** les étapes suivantes :
la création, dans l'ordinateur hôte (1), de données de tâche d'impression de niveau intermédiaire comprenant des commandes de traçage (55) qui sont destinées à être transmises à l'imprimante (3) et dont une partie au moins est exprimée dans un premier format de code intermédiaire (DIM), puis la transmission des données de tâche d'impression créées à l'imprimante (3),
la réception, dans l'imprimante (3), des données de tâche d'impression du niveau intermédiaire et la conversion (S7) des commandes de traçage (55) en un second format de code intermédiaire (PIM), et
la conversion, dans l'imprimante, des commandes de traçage exprimées dans le second format de code intermédiaire (PIM) en données d'image en mode points pour l'impression.

9. Pilote d'imprimante destiné à créer des données de tâche d'impression comprenant des commandes de traçage (47) destinées à une imprimante (3), **caractérisé en ce que** le pilote d'imprimante (9) comprend un dispositif générateur de données de tâche d'impression de niveau intermédiaire (27) utilisé pour la création de données de tâche de niveau intermédiaire contenant les commandes de traçage (55) dont une partie au moins est exprimée dans un premier format de code intermédiaire (DIM).

10. Pilote d'imprimante selon la revendication 9, **caractérisé par** un dispositif générateur de données de tâche d'impression de haut niveau (25) destiné à créer des données de tâche d'impression de haut niveau comprenant des commandes de traçage (47) qui sont toutes exprimées en un langage de commande d'imprimante de haut niveau, et un dispositif de sélection de mode destiné à sélectionner l'un des dispositifs parmi le dispositif générateur de données de tâche d'impression de niveau intermédiaire (27) et le dispositif générateur de données de tâche d'impression de haut niveau (25).

11. Support de programme portant un programme d'ordinateur de pilote d'imprimante destiné à créer des données de tâche d'impression comprenant des commandes de traçage (47) destinées à une imprimante, **caractérisé en ce que** le support de programme porte un groupe d'instructions destinées à créer des données de tâche d'impression de niveau intermédiaire comprenant des commandes de traçage (55) dont une partie au moins est exprimée dans un premier format de code intermédiaire (DIM) de manière que le groupe d'instructions puisse être lu et compris par un ordinateur (1).

12. Imprimante (3), **caractérisée par** :
un dispositif destiné à recevoir des données de tâche d'impression de niveau intermédiaire comprenant des commandes de traçage dont une partie au moins est exprimée dans un premier format de code intermédiaire (DIM),
un dispositif de conversion de code intermédiaire (83, 85) destiné à transformer les commandes de traçage exprimées dans le premier format de code intermédiaire (DIM) en un second format de code intermédiaire (PIM), et
un dispositif supplémentaire de conversion (87) destiné à transformer les commandes de traçage exprimées dans le second format de code intermédiaire (PIM) en données d'image en mode points pour l'impression.

13. Imprimante selon la revendication 12, **caractérisée par** un dispositif graphique destiné, lorsque les commandes de traçage des données de tâche d'impression reçues sont exprimées en langage de commande d'imprimante de haut niveau, à transformer les commandes de traçage (47) en langage de commande d'imprimante de haut niveau au second format de code intermédiaire (PIM).
